# EUROPÄISCHE PATENTSCHRIFT

(11) **EP 3 406 026 B1**
(45) Veröffentlichungstag und Bekanntmachung des Hinweises auf die Patenterteilung: **08.11.2023**
(21) Anmeldenummer: 17745656.3
(22) Anmeldetag: 11.07.2017
(51) Int. Cl.: H02P 6/18, H02P 29/64, H02P 29/60

(54) **ÜBERWACHUNG DES BETRIEBSZUSTANDES VON SYNCHRONMOTOREN**
MONITORING THE OPERATING STATE OF SYNCHRONOMOTORS
SURVEILLANCE DE L'ÉTAT OPÉRATIONNEL DES MOTEURS SYNCHRONE

(30) Priorität: 11.07.2016 DE 102016112693
(43) Veröffentlichungstag der Anmeldung: 28.11.2018
(73) Patentinhaber: EBM-Papst Mulfingen GmbH&CO. KG, 74673 Mulfingen (DE)
(72) Erfinder: LEY, Thomas, 97990 Weikersheim-Laudenbach (DE); KROTSCH, Jens, 97996 Niederstetten (DE)
(74) Vertreter: Staeger & Sperling Partnerschaftsgesellschaft mbB
(86) Internationale Anmeldenummer: PCT/EP2017/067333
(87) Internationale Veröffentlichungsnummer: WO 2018/011170

(56) Entgegenhaltungen:
- DE-A1- 3 736 303
- DE-A1-102012 220 842

## Beschreibung

Die Erfindung betrifft einen Synchronmotor sowie ein Verfahren zum Ermitteln eines nicht bestimmungsgemäßen Betriebszustandes eines solchen Synchronmotors.

In einem Motor und einer Motorantriebsvorrichtung wird ein Antriebsdrehmoment erzeugt, indem ein Strom zum Fließen durch eine Motorspule gebracht wird. Wenn ein großer Strom kontinuierlich durch die Motorspule fließt, erzeugt die Motorspule Wärme, welche eine hohe Temperatur erreichen kann und ggf. eine Störung verursachen kann, so wie ein Schaden an der Motorspule oder eine Entmagnetisierung eines Motormagneten. Demzufolge gibt es im Stand der Technik Lösungen, um die Motorspule vor Überhitzung zu schützen, indem beispielsweise ihre Temperatur gemessen wird, um den durch die Motorspule fließenden Strom zu begrenzen, sowie Lösungen betreffend der Unterbrechung der Kommutierung und dem Setzen eines Fehlers.

In einem konventionellen Motorspulentemperatur-Schätzverfahren für eine Motorantriebsvorrichtung werden die Temperatur, die durch einen Temperatursensor erfasst worden ist, der in der Peripherie eines Motors bereitgestellt ist, und ein tiefpassgefilterter Wert eines Integrals eines Wertes, der erhalten worden ist mittels Multiplizieren eines Quadratwertes eines Motorstroms mit einem Verstärkungsfaktor, zusammenaddiert, um die Temperatur der Motorspule zu schätzen. Modellrechnungen führen aber immer wieder zu reduzierter Verfügbarkeit der Motoren, da Zustände geschätzt werden, die faktisch nicht vorliegen.

Nachteilig sind im Stand der Technik auch Lösungen mit Temperatursensor bei denen 5 Anschlüsse (3 für den Motorbetrieb und zwei für die Temperaturüberwachung) verwendet werden, da hierdurch höhere Kosten entstehen und die Zuverlässigkeit eingeschränkt ist. Ferner wird der Teilausfall einer Wicklung bei den bekannten Lösungen erst erkannt, wenn der Temperatursensor anspricht.

Aus der DE 11 2012 006 170 T5 ist eine Lösung bekannt, bei der die Messung einer Temperatur und eine Schätzung der Wicklungstemperatur durch Drehzahl und Strom erfolgt. Nachteilig ist dabei, dass dies eine genaue und somit kostenintensive Strommessung, eine Temperaturmessung und ein aufwendiges Analyse-Modell erfordert.

Aus der DE 10 2013 012 861 A ist eine alternative Lösung zur Temperaturerfassung offenbart. Hierbei erfolgt die Auswertung der Impedanz, um ausgefallene Wicklungen und/oder Schalter zu erkennen. Hierzu ist es allerdings zunächst notwendig, die Impedanz überhaupt exakt zu ermitteln. Die entsprechende Fertigungssteuerung setzt hierzu eine prozessbegleitende Messung für jeden Motor voraus, um die Impedanz des entsprechenden Motors zu erhalten, was zu höheren Kosten führt.

Aus der EP 2 499 737 A ist eine weitere Lösung zur Temperaturerfassung offenbart.

Diese Druckschrift nennt ein Verfahren zum Plausibilisieren des Drehmomentes einer elektrischen Maschine durch Vergleich eines Leistungsschwellwerts aufgrund des Unterschieds der berechneten elektrischen Leistung, berechnet aus den gemessenen Strangwerten und der mechanischen Leistung, berechnet aus dem berechneten Drehmoments und der Drehzahl. Nachteilig ist hierbei, dass für die Berechnung des Drehmoments exakte Parameter notwendig sind, die allerdings wiederum temperaturabhängig sind, so dass die Berechnung für jeden Betriebsbereich anders erfolgen muss. In der DE 10 2012 220842 A1 und der DE 37 36 303 A1 sind weitere Ausführungen von Synchronmotoren beschrieben.

Der Erfindung liegt deshalb die Aufgabe zugrunde, vorbesagte Nachteile zu überwinden und einen Synchronmotor sowie ein Verfahren bereitzustellen, mit dem auf einfache und zuverlässige Weise die Überwachung der Wicklungstemperatur und damit des Betriebszustandes erfolgen kann.

Diese Aufgabe soll ferner ermöglichen, dass bei der Überwachung des Betriebszustands neben einer zuverlässigen Vermeidung einer übermäßigen Erhitzung der Motorwicklung (Wicklungsschädigung, -zerstörung) oder Blockierung des Rotors auch eine zuverlässige Erkennung des Ausfalls eines Teils der Wicklungen erfolgt sowie die Rotordrehung als solche mit überwacht werden kann.

Ein Grundgedanke besteht darin, dass mittels einer spezifischen Sternschaltung eines Synchronmotors mit drei herkömmlichen Wicklungsanschlüssen die Ausbildung eines weiteren Wicklungsanschlusses am Sternpunkt der Sternschaltung zur Integration eines Erfassungselementes zur Auswertung eines temperaturcharakteristischen Parameters erfolgt, wobei der Wicklungsanschluss zur Auswertung vorzugsweise unmittelbar mit der Steuerungselektronik und/oder Auswertungseinheit des Motors verbunden wird.

Erfindungsgemäß wird daher ein Synchronmotor mit den Merkmalen von Anspruch 1 vorgeschlagen.

Ein besonders geeigneter fehlercharakteristischer Parameter, der mittels des Erfassungselements am vierten Wicklungsanschluss ausgewertet wird, ist die Spannung an diesem Anschluss. Bei der Spannung handelt es sich um eine Potentialdifferenz zwischen dem Potential am Wicklungsanschluss und einem Referenzpotential.

Die Spannung am vierten Wicklungsanschluss entsteht aufgrund der Drehung des Permanentmagnet-Rotors und weist eine zur Drehzahl des Rotors korrespondierende Amplitude auf. Die Spannung weist Maximal-und Minimalwerte, einen Effektivwert und Nulldurchgänge auf. Alternativ zur Auswertung der Amplitudenmaxima kann auch der Effektivwert der Spannung am vierten Wicklungsanschluss sowie die anderen Spannungswerte herangezogen werden.

Die erfasste Spannung steht somit unmittelbar in Verbindung mit der Drehbewegung des Rotors und ist weitgehend unabhängig von der Art und Weise der Ansteuerung, d. h. dem augenblicklichen Bestromungszustand der Wicklungen.

Wird das am vierten Wicklungsanschluss ausgewertete Potential aufgrund der im Erfassungselement auftretenden Ereignisse (z. B. überproportionaler Widerstandsanstieg oder Schaltereignis aufgrund einer Übertemperatur) kleiner als beim bestimmungsgemäßen Betrieb, somit kleiner als ein spezifischer Spannungs-Grenzwert, erkennt die Steuerungselektronik den Fehlerfall als eine Überhitzung unabhängig von einem blockierten oder drehenden Rotor.

Geht der Überhitzung allerdings ein Fehlerfall voraus, wie ein blockierter Rotor, wird dies durch ein Unterschreiten eines festgelegten Schwellwerts, aufgrund des erwarteten, aber durch ausbleibender Drehung reduzierten Amplitudenwerts, bereits vor der Überhitzung detektiert.

Eine solche Ausführung ist insbesondere bei Motoren von besonderem Vorteil, deren thermische Zeitkonstante besonders klein ist und daher aufgrund der Trägheit eine Zerstörung der Wicklung vor einem Ansprechen eines thermischen Erfassungselements zu Schäden führen könnte.

Im Falle des Ansprechens eines thermischen Erfassungselements, aufgrund Übertemperatur (z. B. Betrieb bei zu hoher Umgebungstemperatur oder zu starke Belastung im Überlastbetrieb) wird dies ebenfalls anhand des reduzierten bzw. ausbleibenden Spannungspotentials detektiert.

Mit Vorteil ist die Steuerungselektronik als eine Motorantriebs-Steuerungselektronik ausgebildet, so dass diese neben der Steuerung des Motorantriebes auch die Überwachung und Temperaturauswertung übernehmen kann.

Das zuvor genannte Erfassungselement kann ein einziges Erfassungselement sein, oder eine Gruppe von solchen Erfassungselementen. Die Anzahl der Erfassungselemente hängt unter anderem ab von der Qualität und Ausführung der thermischen Kopplung. Im Fall einer optimalen thermischen Kopplung wird nur ein einziges Erfassungselement benötigt. Werden für die thermisch zuverlässige Anbindung mehrere Erfassungselemente benötigt, werden diese elektrisch in Reihe geschaltet. Durch eine bestimmungsgemäße Reihenschaltung verhalten sich mehrere Erfassungselemente in Summe wie ein einziges Erfassungselement.

Als Erfassungselemente für die Erfassung der Temperatur können mit Vorteil schaltende Elemente z. B. Bimetallschalter, Temperaturwächter oder Temperaturschalter verwendet werden. Durch die Festlegung eines definierten Schwellwerts für die Umgebung und Anwendung, als maximal zulässige Grenz-Temperatur wird der temperaturspezifische Schaltpunkt für den Fehlerfall festgelegt.

In einer alternativen Ausführungsform der Erfindung kann vorgesehen werden, dass thermoresistive Erfassungselemente, deren elektrischer Widerstand sich mit der Temperatur ändert, verwendet werden. Vorzugsweise ist ein positiver Temperaturkoeffizient zu wählen, was bedeutet, dass mit steigender Temperatur der Widerstand des thermoresistiven Erfassungselements zunimmt. Hierzu können sogenannte PTC-Elemente verwendet werden. Mit besonderem Vorteil kann ein Erfassungselement verwendet werden, das sich ähnlich wie ein Schalter verhält und insofern eine Charakteristik aufweist, bei der eine überproportionale Zunahme des Widerstandes bei Temperaturerhöhung erfolgt.

Eine weitere d. h. alternative Form der Erfassungselemente sind thermoelektrische Bauteile, die temperaturabhängig, aufgrund des thermoelektrischen Effekts, eine Spannung ausbilden. Diese Spannung steigt im Fehlerfall so stark an, dass in diesem Zustand die Masche zwischen der vierten Wickelverbindung und dem Sternpunkt als vom bestimmungsgemäßen Betrieb eindeutig unterscheidbar betrachtet werden kann.

Die Erfassungselemente können mit Vorteil als Öffner ausgeführt sein, wobei die im Fehlerfall den Widerstand im betreffenden Strompfad signifikant erhöhen. Alternativ könnten auch Schließer vorgesehen werden, wobei die Auswertung dann mit negativer Logik und ggf. gegenüber den beschriebenen Öffnern eingeschränkten Möglichkeiten zur Auswertung erfolgt.

In einer vorteilhaften Ausgestaltung der Erfindung ist vorgesehen, dass wenigstens ein weiteres, vom ersten Erfassungselement, vorzugsweise ein Hall-Element, vorgesehen ist, welches elektrisch in Reihe zum ersten Erfassungselement geschaltet ist und welches als Steuerungselement mit veränderlichem Widerstand oder veränderlicher Spannung ausgebildet ist, wobei der Widerstand oder die Spannung von der Rotordrehstellung abhängt.

Es ist daher von Vorteil, das Erfassungselement als potentialbeeinflussendes Steuerungselement auszubilden, um die Spannung zwischen dem Sternpunkt und dem Wickelanschluss mit steigender Temperatur zu beeinflussen.

Weiter vorteilhaft ist es, wenn das Erfassungselement ferner eine Schaltfunktion aufweist, um beim Überschreiten einer vordefinierten Grenztemperatur die elektrische Verbindung zwischen dem Sternpunkt und dem Wickelanschluss zu trennen.

In einer vorteilhaften Ausgestaltung der Erfindung ist vorgesehen, dass das erstgenannte Erfassungselement als temperaturabhängiges Steuerungselement ausgebildet ist, um den elektrischen Widerstand in dem Verbindungsabschnitt zwischen dem Sternpunkt und dem Wickelanschluss mit steigender Temperatur zu erhöhen.

In einer weiteren vorteilhaften Ausgestaltung der Erfindung ist vorgesehen, dass eine resistive Sternpunkt-Referenzschaltung mit einem Sternpunkt vorgesehen ist, wobei der Sternpunkt der Referenzschaltung jeweils über einen Widerstand mit jeweils einem der Wickelanschlüsse des Synchronmotors verbunden ist, während ein resistiver Sternpunkt-Referenzanschluss vom Sternpunkt zu einer Auswerteeinheit geführt ist.

Alternativ kann vorgesehen werden dass ein Referenzpunkt für die Differenzspannung am vierten Anschluss des Sternpunktes als Mittelpunkt eines Spannungsteilers im Zwischenkreis der Steuerungselektronik ausgebildet ist.

Die Spannung (Potentialdifferenz) zwischen dem vierten Wickelanschluss, der vom Sternpunkt der Motor-Sternschaltung und dem Sternpunkt der Referenz-Schaltung kann zur Auswertung des Betriebszustandes mit Vorteil verwendet werden, so dass diese Anschlüsse unmittelbar mit einer Auswerteeinheit verbunden werden können.

In einer vorteilhaften Ausführungsform kann auch ein Teilausfall des Motors erkannt werden, der z. B. aufgrund eines Kurzschlusses in einem Teil der Wicklung zur Überhitzung führt. Dies kann auf Grund der unsymmetrischen Entwicklung der Spannung innerhalb einer elektrischen Umdrehung als vom bestimmungsgemäßen Verlauf abweichender Verlauf detektiert werden, z. B. eine stufenförmige Entwicklung oder dem Vergleich des kleinsten und größten Amplitudenwerts oder dem teilweise Unterschreiten der definierten Schaltschwelle.

Ein weiterer Aspekt der vorliegenden Erfindung betrifft ein Verfahren zum Ermitteln eines nicht bestimmungsgemäßen Betriebszustandes mit einem wie zuvor ausgebildeten Synchronmotors, wobei eine Auswerteeinheit vorgesehen ist, welche die Auswertung der Spannung am Wickelanschluss gegenüber einem Referenzpotential vornimmt und wobei ein Abfallen der Spannung unterhalb eines vordefinierten Spannungsschwellwertes von der Steuerungselektronik als nicht bestimmungsgemäßer Betriebszustand (Blockierung, Wicklungsüberhitzung, Wicklungsasymmetrie) erkannt wird.

Die Auswertung kann dadurch erfolgen, dass eine Auswertung der Spannung am Wickelanschluss erfolgt, während die Anzahl der Nulldurchgänge der Spannung während einer Periode der Speisespannungsfrequenz erfasst und mit einer vorgegebenen Anzahl an Nulldurchgängen verglichen wird, wobei eine abweichende Anzahl an Nulldurchgängen von der Steuerungselektronik oder der Auswerteeinheit als nicht bestimmungsgemäßer Betriebszustand erkannt wird.

Alternativ kann mittels einer Frequenzauswertung der Spannungsfrequenz am Wickelanschluss ein Fehlerfall durch Vergleich der ermittelten Frequenz mit einer Motorspeisespannungsfrequenz und einer Frequenz unterhalb eines vordefinierten Frequenzschwellwertes von der Steuerungselektronik oder der Auswerteeinheit als nicht bestimmungsgemäßer Betriebszustand erkannt werden.

In einer vorteilhaften Ausgestaltung des Verfahrens kann vorgesehen sein, dass zur Temperaturauswertung bzw. zur Erfassung des Betriebszustandes eine Differenzspannung U_{TR} zwischen dem Wickelanschluss und eines wie zuvor beschriebenen Sternpunkt-Referenzanschluss eines Spannungsteilers genutzt. Weiter kann mit Vorteil vorgesehen sein, dass eine Drehzahlerfassung des Synchronmotors erfolgt, wobei die Drehzahlerfassung basierend auf der Differenzspannung U_{TR} erfolgt.

Ebenfalls kann mit Vorteil vorgesehen sein, dass eine Positionserfassung des Synchronmotors erfolgt, wobei die Positionserfassung basierend auf der Differenzspannung U_{TR} erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine vereinfachte schematische Ansicht eines Motors mit einer Wechselrichterbrücke;
- Fig. 2a: ein Ausführungsbeispiel einer Sternschaltung mit einem Erfassungselement;
- Fig. 2b: das Ausführungsbeispiel der Figur 2a mit einer Elektronik;
- Fig. 3: ein Ausführungsbeispiel mit einer Referenzschaltung und einer thermischen Überwachung;
- Fig. 4: ein Ausführungsbeispiel einer Sternschaltung mit einem thermischen Erfassungselement und einem Positionserfassungselement;
- Fig. 5: eine Darstellung einer beispielhaften Amplitudenauswertung;
- Fig. 6: eine Darstellung einer beispielhaften Auswertung des Spannungs-Effektivwerts;
- Fig. 7: eine Darstellung einer beispielhaften Auswertung der Nulldurchgänge einer erfassten Spannungskurve;
- Fig. 8a: eine Darstellung von Strom- und Spannungskurven im Normalbetrieb;
- Fig. 8b: eine Darstellung von Strom- und Spannungskurven bei blockiertem Rotor;
- Fig. 8c: eine Darstellung von Strom- und Spannungskurven bei einem Teilkurzschluss in einer Motorwicklung;
- Fig. 8d: eine Darstellung von Strom- und Spannungskurven bei einem Teilkurzschluss in einer Motorwicklung mit einer alternativen Auswertung und
- Fig. 8e: eine Darstellung von Strom- und Spannungskurven bei Verwendung eines Übertemperaturschalters.

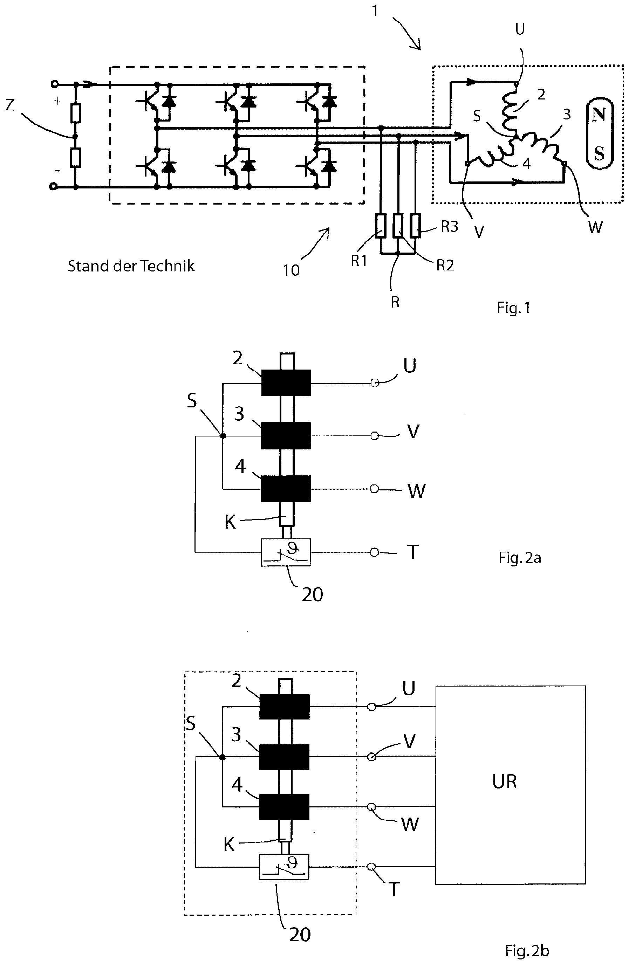

Im Folgenden wird die Erfindung mit Bezug auf die Figuren 1 bis 8e näher beschrieben, wobei gleiche Bezugszeichen in den Figuren auf gleiche strukturelle und/oder funktionale Merkmale hinweisen.

In der Fig. 1 wird zunächst eine vereinfachte schematische Ansicht eines aus dem Stand der Technik bekannten Synchronmotors 1 umfassend einen Permanentmagnet-Rotor und einen Stator mit drei einen Wicklungsanschluss U, V, W aufweisenden Wicklungssträngen 2, 3, 4, die in einem Sternpunkt S einer Sternschaltung mit einer Wechselrichterbrücke 10 miteinander verbunden sind gezeigt (Quelle: "Shen 2004, Sensorless Flux-Weakening Control of Permanent-Magnet Brushless Machines Using Third Harminic Back, Volume: 40, Issue: 6, ISSN: 0093-9994")

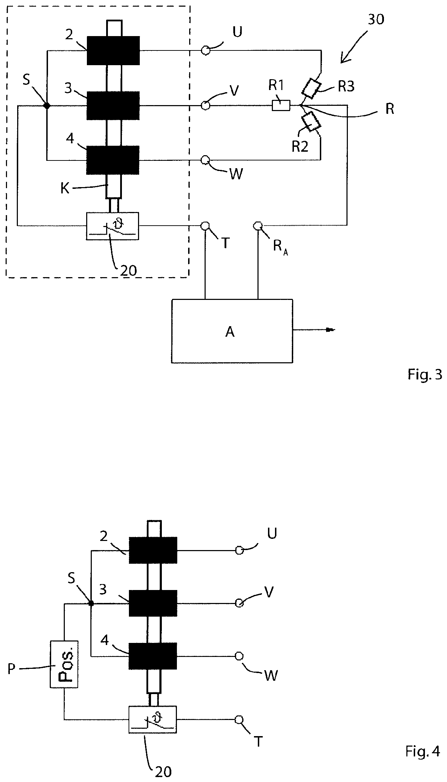

Die Wicklungsanschlüsse U, V, W sind jeweils mit einer Sternpunkt-Referenzschaltung mit einem Sternpunkt R verbunden, der jeweils über einen Widerstand R1, R2, R3, während ein Sternpunkt-Referenzanschluss R_{A} vom Sternpunkt R für eine Auswerteeinheit A, wie in Figur 3 gezeigt, vorgesehen ist. Ferner ist in einer alternativen Ausführung zur Fig. 3 hier ein Referenzpunkt zur Erfassung der Differenzspannung U_{TZ} gegenüber dem Wickelanschluss T dargestellt, der als Mittelpunkt eines Spannungsteiles im Zwischenkreis der Motorsteuerungselektronik ist.

Die Fig. 2a zeigt ein Ausführungsbeispiel einer Sternschaltung mit einem Erfassungselement 20 und die Fig. 2b das Ausführungsbeispiel der Figur 2a zusätzlich verbunden mit einem Umrichter UR, wobei der Umrichter UR in der Steuerungselektronik 10 integriert sein kann.

Das Erfassungselement 20 ist als temperaturabhängiges Erfassungselement ausgebildet, zur unmittelbaren Erfassung der Temperatur der Wicklungsstränge 2, 3, 4, wobei das Erfassungselement 20 elektrisch in Reihe zum Sternpunkt S der Motor-Sternpunktschaltung geschaltet ist. Das Erfassungselement 20 ist ferner mit wenigstens einem Wicklungsstrang über eine thermische Kopplung K gekoppelt. Ferner ist ein vierter Wicklungsanschluss T ausgeführt, der mit der Steuerungselektronik 10 und/oder dem Umrichter verbunden ist. Die Motoranschlüsse U, V, W sind gemäß Fig. 2b mit einem Umrichter UR verbunden. Der Umrichter UR bzw. die Steuerungselektronik 10 enthalten elektronische Schalt- und Auswertekreise, mit denen der Motor über die Wicklungsanschlüsse U, V und W angetrieben und das Signal des Anschlusses T ausgewertet wird.

Die Fig. 3 zeigt ein Ausführungsbeispiel mit einer Referenzschaltung 30 (aus den drei Widerständen R1, R2 und R3) und einer thermischen Überwachung 20 sowie einer Auswerteeinheit A. Hier ist der Referenzpunkt zur Erfassung der Differenzspannung U_{TR} gegenüber dem Wickelanschluss T als Sternpunkt R der Sternpunkt-Referenzschaltung mit drei Widerständen R1, R2, R3 ausgebildet, wobei der Anschluss R_{A} vom Sternpunkt R zu einer Auswerteeinheit A führt.

In der Fig. 4 ist ein Ausführungsbeispiel einer Sternschaltung mit einem thermischen Erfassungselement 20 und einem Positionserfassungselement P gezeigt, welches elektrisch in Reihe zum Erfassungselement 20 geschaltet ist und welches als Steuerungselement mit veränderlichem Widerstand oder veränderlicher Spannung ausgebildet ist.

Hierbei wird das durch die Drehstellung des Rotors erzeugte Signal des Positionserfassungselements P mit dem Signal des Erfassungselements 20 zu einem Summensignal kombiniert.

Als Positionserfassungselement P kann z. B. ein Hall-Element verwendet werden, welches eine zusätzliche drehstellungsabhängige Spannung erzeugt oder ein Hall-Schalter, der drehstellungsabhängig die Masche unterbricht. Alternativ kann als Positionserfassungselement P ein GMR-Sensor eingesetzt werden, der eine drehstellungsabhängige Widerstandsänderung bewirkt.

Die Überlagerung der am Sternpunkt S entstehenden Spannung mit der Spannung des Positionserfassungselement P führt zur Beeinflussung der am Sternpunkt S entstehenden Spannung durch das Positionserfassungselement P. Das Spannungssignal kann in einer Betriebsart vom Sternpunkt S durch das Positionserfassungselement P durchgeschleift bzw. überlagert werden. Statt des statischen Zustands eines Magnetschalters oder Hallelements wird das Signal vom Sternpunkt S als Zustand an das Erfassungselement 20 weitergeleitet. In einer anderen Betriebsart kann die Energieversorgung für das Positionserfassungselement P z. B. aus dem Sternpunkt oder einem der Wicklungsanschlüsse U, V, W hergenommen werden.

In beiden Fällen ist ein Ausbleiben des Summensignals ein eindeutig fehlerhafter Betriebszustand.

In der ersten Betriebsart kann ferner noch ein messtechnischer Fehler abgefangen werden, der sich in der Form äußert, dass bei stehenden Rotor, aufgrund äußerer Einflüsse, Flankenwechsel im Positionserfassungselement P erzeugt werden, die fälschlicher Weise den normalen Betrieb des Motors vorgeben, aber zu dem bereits beschriebenen thermischen Ausfall der Maschine führen können. Mit Vorteil wird aber durch das Abweichen des Signals vom Signalverlauf beim bestimmungsgemäßen Betrieb oder das Ausbleiben des Signals zuvor genannten Summensignals auch dieser Zustand eindeutig erkannt und es kann z. B. eine Abschaltung oder Stromreduktion bewirkt werden.

Auch der Ausfall des Positionserfassungselements P, der dazu führt dass keine Signale mehr beim Erfassungselement 20 ankommen, wird ebenfalls erkannt auch wenn der Motor sich nicht bestimmungsgemäß drehen sollte.

Durch einen einfachen Vergleich der aus dem Positionserfassungselement P ermittelten Drehzahl mit der, an den Motorklemmen U, V, W vorgegebenen Speisefrequenz erhält man die Kenntnis über den Dreh-Zustand des Rotors.

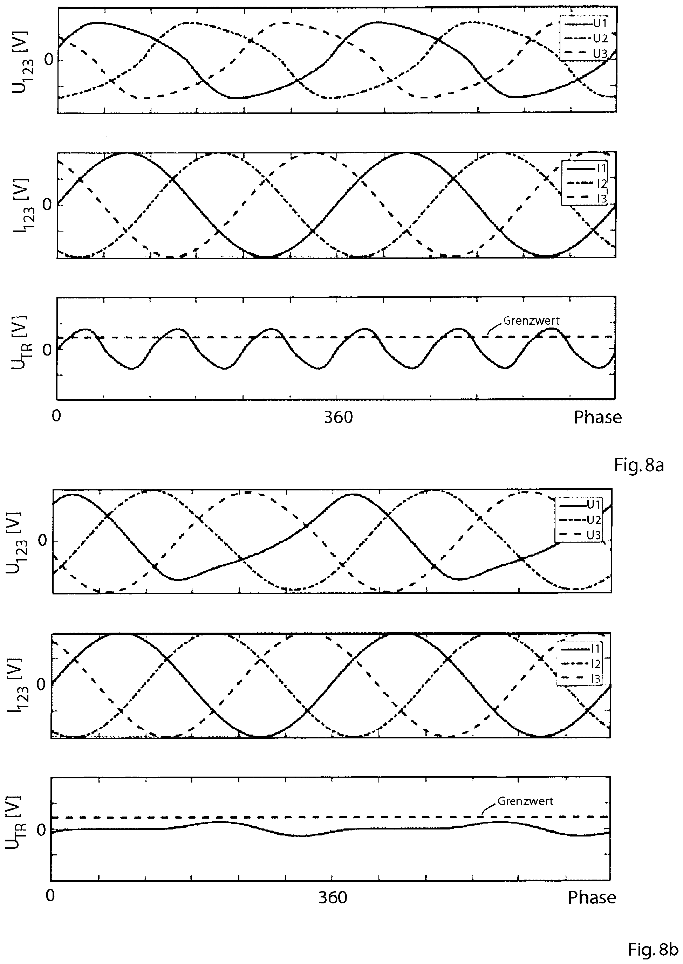

Weichen beide Frequenzen voneinander ab, kann auf einen blockierten Motor oder einem asynchron laufenden Motor geschlossen werden was in der Fig. 8b dargestellt ist, auf die später noch näher eingegangen wird.

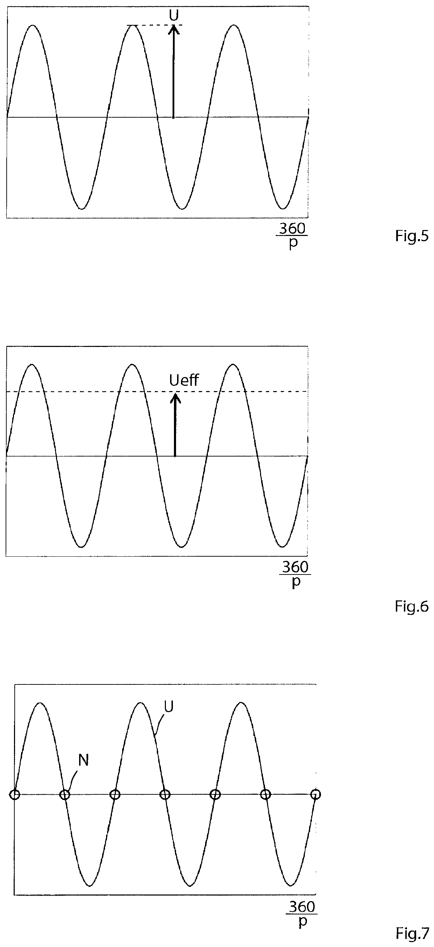

Die Figuren 5, 6 und 7 zeigen eine Darstellung einer beispielhaften Amplitudenauswertung, eine Darstellung einer beispielhaften Auswertung des Spannungs-Effektivwerts und die Auswertung der Nulldurchgänge N einer erfassten Spannungskurve durch Auswertung des Potentials am Wickelanschluss T nach dem Erfassungselement 20. Das Potential am Wickelanschluss T entsteht aufgrund der Drehung des Permanentmagnet-Rotors und hat die Eigenschaft einer, wie in Fig. 5 gezeigten, der Drehzahl proportionalen Amplitude bzw. wie in Fig. 6 gezeigt eines Effektivwert Ueff.

Die Auswertung der Anzahl der Nulldurchgänge des am Wickelanschluss T messbaren Spannungsverlaufs, ist in Fig. 7 dargestellt. Im Fall der Blockierung bzw. eines asynchronen Betriebs ändert sich die Anzahl der Nulldurchgänge pro elektrischer Periode, wie in der Fig. 8a beispielhaft dargestellt, von hier sechs Nulldurchgängen im Normalbetrieb auf nunmehr zwei Nulldurchgänge bei blockierten Rotor, dargestellt in der Fig. 8b.

In den Figuren 8a bis 8e sind entsprechende Darstellung der Auswertung der Differenzspannung U_{TR} in der jeweils unteren Kurve der Figuren gezeigt. Die jeweils obere Kurve der Figuren 8a bis 8e zeigt den Spannungsverlauf der Strangspannungen der Motorwicklungen U, V, W und die jeweils mittlere Kurve der Figuren 8a bis 8e zeigt den Stromverlauf durch die Wicklungen.

Die Fig. 8b zeigt eine Darstellung der drei Kurven bei blockiertem Rotor, wodurch nur noch zwei Nulldurchgänge bei der Differenzspannung U_{TR} zu erkennen sind und eine wesentlich flachere Spannungskurve U_{TR}.

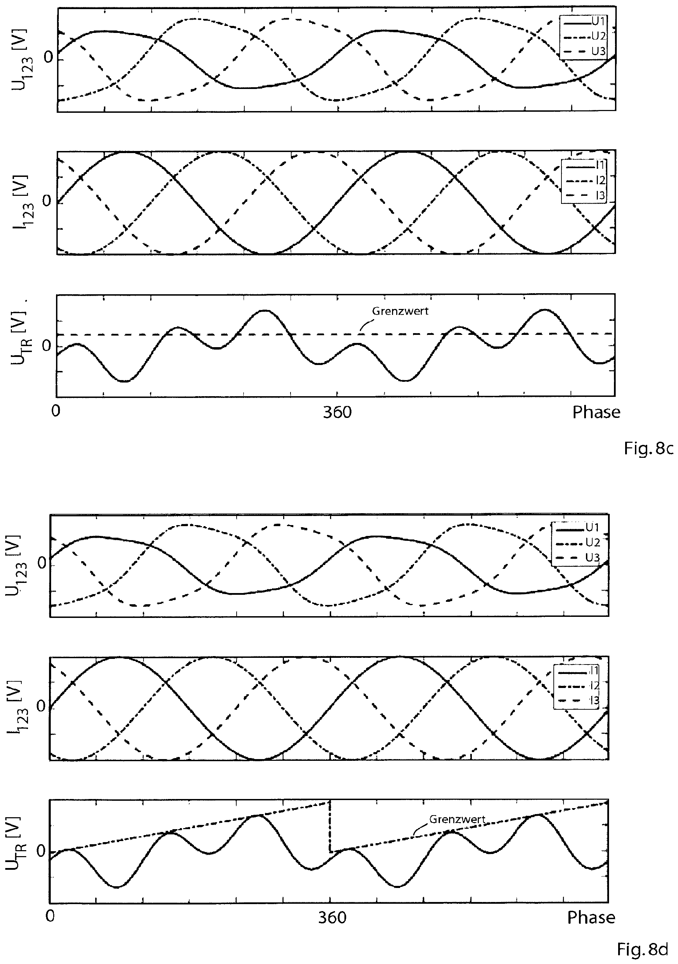

Die Figuren 8c und 8d zeigen den Kurvenverlauf bei einem Teilkurzschluss in einer Motorwicklung mit unterschiedlicher Auswertung der Spannungskurve U_{TR}.

Erkennbar ist die asymmetrische Entwicklung der Spannung U_{TR} innerhalb einer elektrischen Periode entsprechend der Darstellung. Die Auswertung kann aufgrund der stufenförmigen Entwicklung oder dem Vergleich des kleinsten und größten Amplitudenwerts oder dem teilweise Unterschreiten der Schaltschwelle erfolgen.

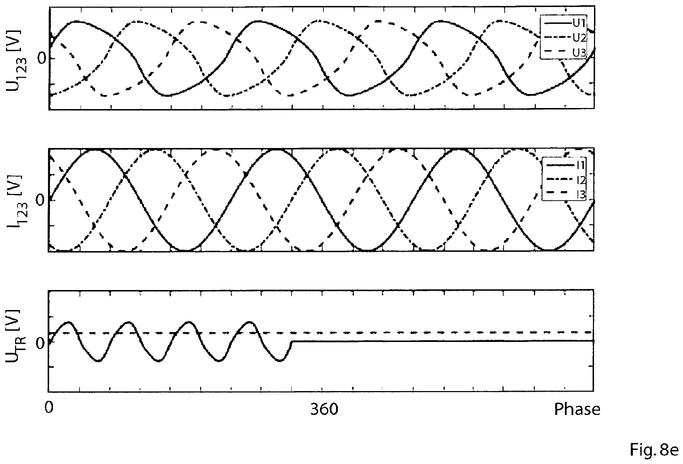

Die Fig. 8e zeigt den Kurvenverlauf bei Verwendung eines Übertemperaturschalters, bei dem die Spannung U_{TR} am Wickelanschluss T auf Null fällt, sobald die Temperatur einen bestimmten Temperatur-Grenzwert überschritten hat.

In allen Fällen kann eine herkömmliche Maßnahme zum Motorschutz erfolgen, die nach einer Detektion eines nicht bestimmungsgemäßen Betriebszustandes z. B. durch die Motorsteuerung bewirkt werden kann. Ein wesentlicher Vorteil ist darin zu sehen, dass für die Überwachung lediglich ein weiterer Anschluss T gegenüber den für den Betrieb grundsätzlich erforderlichen Wickelanschlüssen U, V, W benötigt wird.

## Patentansprüche

1. Synchronmotor (1) umfassend einen Permanentmagnet-Rotor und einen Stator mit drei einen Wicklungsanschluss (U, V, W) aufweisenden Wicklungssträngen (2, 3, 4), die in einem Sternpunkt (S) einer Sternschaltung und mit einer Steuerungselektronik (10) verbunden sind, wobei ferner ein Erfassungselement (20) vorgesehen ist, das ausgebildet ist, zur mittelbaren oder unmittelbaren Erfassung der Temperatur oder einer temperaturabhängigen Motorcharakteristik wenigstens eines Wicklungsstranges (2, 3, 4), wobei der erste Anschluss des Erfassungselements (20) elektrisch leitend mit dem Sternpunkt (S) verbunden ist und der zweite Anschluss des Erfassungselements (20) ist als ein vierter Wicklungsanschluss (T) ausgeführt und dieser Wicklungsanschluss (T) mit der Steuerungselektronik (10) verbunden ist, **dadurch gekennzeichnet, dass** das Erfassungselement (20) ferner eine Schaltfunktion aufweist, um beim Überschreiten einer vordefinierten Grenztemperatur die elektrische Verbindung zwischen dem Sternpunkt (S) und dem vierten Wickelanschluss (T) zu trennen.

2. Synchronmotor gemäß Anspruch 1, **dadurch gekennzeichnet, dass** die Steuerungselektronik (10) eine Motorantriebs-Steuerungselektronik ist.

3. Synchronmotor gemäß Anspruch 1 oder 2, **dadurch gekennzeichnet, dass** die Steuerungselektronik (10) eine Wechselrichterbrücke umfasst.

4. Synchronmotor gemäß Anspruch 1, 2 oder 3, **dadurch gekennzeichnet, dass** die Steuerungselektronik (10) ferner einen Umrichter umfasst.

5. Synchronmotor gemäß einem der vorhergehenden Ansprüche **dadurch gekennzeichnet, dass** wenigstens ein weiteres Erfassungselement (P), vorzugsweise ein Hall-Element, vorgesehen ist, welches elektrisch in Reihe zum ersten Erfassungselement (20) geschaltet ist und welches als Steuerungselement mit veränderlichem Widerstand oder veränderlicher Spannung ausgebildet ist, wobei der Widerstand oder die Spannung von der Rotordrehstellung abhängt.

6. Synchronmotor gemäß einem der vorhergehenden Ansprüche, **dadurch gekennzeichnet, dass** das Erfassungselement (20) als temperaturabhängiges Steuerungselement ausgebildet ist, um den elektrischen Widerstand in dem Verbindungsabschnitt zwischen dem Sternpunkt (S) und dem Wickelanschluss (T) mit steigender Temperatur zu erhöhen.

7. Synchronmotor gemäß einem der vorhergehenden Ansprüche, **dadurch gekennzeichnet, dass** das Erfassungselement (20) als spannungserzeugendes Steuerungselement ausgebildet ist, um die Potentialdifferenz zwischen dem Sternpunkt (S) und dem Wickelanschluss (T) mit steigender Temperatur zu erhöhen.

8. Synchronmotor gemäß einem der vorhergehenden Ansprüche, **dadurch gekennzeichnet, dass** eine resistive Sternpunkt-Referenzschaltung mit einem Sternpunkt (R) vorgesehen ist, der jeweils über einen Widerstand (R1, R2, R3) mit jeweils einem der Wickelanschlüsse (U, V, W) verbunden ist, während ein resistiver Sternpunkt-Referenzanschluss (R_{A}) vom Sternpunkt (R) für eine Auswerteeinheit (A) vorgesehen ist.

9. Synchronmotor gemäß einem der vorhergehenden Ansprüche, **dadurch gekennzeichnet, dass** ein Referenzpunkt für die Ermittlung des Potentials am Wickelanschluss (T) als Mittelpunkt eines Spannungsteilers im Zwischenkreis der Steuerungselektronik (10) ausgebildet ist.

10. Verfahren zum Ermitteln eines nicht bestimmungsgemäßen Betriebszustandes eines Synchronmotors ausgebildet mit den Merkmalen gemäß einem der Ansprüche 1 bis 9, das die Schritte umfasst:
a. mittelbares oder unmittelbares Erfassen der Temperatur oder einer temperaturabhängigen Motorcharakteristik wenigstens eines Wicklungsstranges (2, 3, 4) mittels des Erfassungselements (20),
b. Trennen der elektrischen Verbindung zwischen dem Sternpunkt (S) und dem vierten Wickelanschluss (T) beim Überschreiten einer vordefinierten Grenztemperatur mittels der Schaltfunktion des Erfassungselements (20).

11. Verfahren nach Anspruch 10, **dadurch gekennzeichnet, dass** die Temperaturüberwachung oder Überwachung einer temperaturabhängigen Motorcharakteristik wenigstens eines Wicklungsstranges (2, 3, 4) über eine Auswertung der Spannung am Wickelanschluss (T) erfolgt, während die Anzahl der Nulldurchgänge der Spannung während einer Periode der Speisespannungsfrequenz erfasst und mit einer vorgegebenen Anzahl an Nulldurchgängen verglichen wird, wobei eine niedrigere Anzahl an Nulldurchgängen von der Steuerungselektronik (10) oder der Auswerteeinheit (A) als nicht bestimmungsgemäßer Betriebszustand erkannt wird.

12. Verfahren nach Anspruch 10 oder 11, **dadurch gekennzeichnet, dass** die Temperaturüberwachung oder Überwachung einer temperaturabhängigen Motorcharakteristik wenigstens eines Wicklungsstranges (2, 3, 4) über eine Frequenzauswertung der Spannungsfrequenz am Wickelanschluss (T) durch Vergleich der ermittelten Frequenz mit einer Motorspeisespannungsfrequenz erfolgt und eine Frequenz unterhalb eines vordefinierten Frequenzschwellwertes von der Steuerungselektronik (10) oder der Auswerteeinheit (A) als nicht bestimmungsgemäßer Betriebszustand erkannt wird.

13. Verfahren nach einem der vorhergehenden Ansprüche 10 bis 12, **dadurch gekennzeichnet, dass** zur Temperaturauswertung eine Differenzspannung U_{TR} zwischen dem Wickelanschluss (T) und dem Spannung an einem Sternpunkt-Referenzanschluss (R_{A}) eines Spannungsteilers gebildet wird.

14. Verfahren nach einem der vorhergehenden Ansprüche 10 bis 13, **dadurch gekennzeichnet, dass** eine Drehzahlerfassung des Synchronmotors (1) erfolgt, wobei die Drehzahlerfassung basierend auf der Differenzspannung U_{TR} erfolgt.

15. Verfahren nach einem der vorhergehenden Ansprüche 10 bis 14, **dadurch gekennzeichnet, dass** eine Positionserfassung des Synchronmotors (1) erfolgt, wobei die Positionserfassung basierend auf der Differenzspannung U_{TR} erfolgt.

## Claims

1. A synchronous motor (1), comprising a permanent magnet rotor and a stator with three phase windings (2, 3, 4) having a winding terminal (U, V, W) which are connected in a star point (S) of a star-connected circuit and to control electronics (10), wherein a detection element (20) is further provided which is designed to indirectly or directly detect the temperature or a temperature-dependent motor characteristic of at least one winding phase (2, 3, 4), wherein the first terminal of the detection element (20) is connected in an electrically conductive manner to the star point (S) and the second terminal of the detection element (20) is embodied as a fourth winding terminal (T), which winding terminal (T) is connected to the control electronics (10),
**characterized in that** the detection element (20) also has a switching function for disconnecting the electrical connection between the star point (S) and the fourth winding terminal (T) when a predefined threshold temperature is exceeded.

2. The synchronous motor as set forth in claim 1, **characterized in that** the control electronics (10) are motor drive control electronics.

3. The synchronous motor as set forth in claim 1 or 2, **characterized in that** the control electronics (10) comprise an inverter bridge.

4. The synchronous motor as set forth in claim 1, 2, or 3, **characterized in that** the control electronics (10) further comprise an AC-to-AC converter.

5. The synchronous motor as set forth in any one of the preceding claims, **characterized in that** at least one further detection element (P), preferably a Hall element, is provided which is electrically connected in series to the first detection element (20) and is embodied as a control element with variable resistance or variable voltage, the resistance or voltage depending on the rotational position of the rotor.

6. The synchronous motor as set forth in any one of the preceding claims, **characterized in that** the detection element (20) is embodied as a temperature-dependent control element in order to increase the electrical resistance in the connection portion between the star point (S) and the winding terminal (T) as the temperature increases.

7. The synchronous motor as set forth in any one of the preceding claims, **characterized in that** the detection element (20) is embodied as a voltage-generating control element in order to increase the potential difference between the star point (S) and the winding terminal (T) as the temperature increases.

8. The synchronous motor as set forth in any one of the preceding claims, **characterized in that** a resistive star point reference circuit is provided with a star point (R), which is respectively connected to one of the winding terminals (U, V, W) via a resistor (R1, R2, R3), while a resistive star point reference terminal (R_{A}) is provided from the star point (R) for an evaluation unit (A).

9. The synchronous motor as set forth in any one of the preceding claims, **characterized in that** a reference point for determining the potential at the winding terminal (T) is embodied as the midpoint of a voltage divider in the DC link of the control electronics (10).

10. A method for identifying an improper operating state of a synchronous motor which embodied the features as set forth in any one of claims 1 to 9, comprising the steps:
a. indirect or direct detection of the temperature or temperature-dependent motor characteristic of at least one winding phase (2, 3, 4) by means of the detection element (20),
b. disconnecting the electrical connection between the star point (S) and the fourth winding terminal (T) when a predefined threshold temperature is exceeded using the switching function of the detection element (20).

11. The method as set forth in claim 10, **characterized in that** the temperature monitoring or monitoring of a temperature-dependent motor characteristic of at least one winding phase (2, 3, 4) is performed by evaluating the voltage at the winding terminal (T), while the number of zero crossings of the voltage during a period of the supply voltage frequency is detected and compared with a predetermined number of zero crossings, with a lower number of zero crossings being identified by the control electronics (10) or the evaluation unit (A) as an improper operating state.

12. The method as set forth in claim 10 or 11, **characterized in that** the temperature monitoring or monitoring of a temperature-dependent motor characteristic of at least one winding phase (2, 3, 4) is performed by means of a frequency evaluation of the voltage frequency at the winding terminal (T) by comparing the detected frequency with a motor supply voltage frequency, and a frequency below a predefined frequency threshold value is identified by the control electronics (10) or the evaluation unit (A) as an improper operating state.

13. The method as set forth in any one of preceding claims 10 to 12, **characterized in that**, for the purpose of the temperature evaluation, a differential voltage U_{TR} is formed between the winding terminal (T) and the voltage at a star point reference terminal (R_{A}) of a voltage divider.

14. The method as set forth in any one of preceding claims 10 to 13, **characterized in that** the speed of the synchronous motor (1) is detected, the speed detection being performed on the basis of the differential voltage U_{TR}.

15. The method as set forth in any one of preceding claims 10 to 14, **characterized in that** the position of the synchronous motor (1) is detected, the position detection being performed on the basis of the differential voltage U_{TR}.

## Revendications

1. Moteur synchrone (1), comprenant un rotor à aimant permanent et un stator pourvu de trois sections d'enroulement (2, 3, 4) présentant une borne d'enroulement (U, V, W) et qui sont reliés en un point neutre (S) d'un montage en étoile et à une électronique de commande (10), dans lequel en outre un élément de détection (20) est prévu qui est réalisé pour la détection directe ou indirecte de la température ou d'une caractéristique de moteur dépendant de la température d'au moins une section d'enroulement (2, 3, 4), dans lequel la première borne de l'élément de détection (20) est reliée de manière électriquement conductrice au point neutre (S), et la deuxième borne de l'élément de détection (20) est réalisée sous la forme d'une quatrième borne d'enroulement (T), et cette borne d'enroulement (T) est reliée à l'électronique de commande (10),
**caractérisé en ce que** l'élément de détection (20) présente en outre une fonction de commutation afin de déconnecter la connexion électrique entre le point neutre (S) et la quatrième borne d'enroulement (T) en cas de dépassement d'une température limite prédéfinie.

2. Moteur synchrone selon la revendication 1, **caractérisé en ce que** l'électronique de commande (10) est une électronique de commande d'entraînement de moteur.

3. Moteur synchrone selon la revendication 1 ou 2, **caractérisé en ce que** l'électronique de commande (10) comprend un pont d'onduleur.

4. Moteur synchrone selon la revendication 1, 2 ou 3, **caractérisé en ce que** l'électronique de commande (10) comprend en outre un convertisseur.

5. Moteur synchrone selon l'une quelconque des revendications précédentes, **caractérisé en ce qu'**au moins un autre élément de détection (P), de préférence un élément à effet Hall, est prévu qui est monté électriquement en série avec le premier élément de détection (20), et qui est réalisé sous la forme d'un élément de commande à résistance variable ou à tension variable, la résistance ou la tension dépendant de la position de rotation du rotor.

6. Moteur synchrone selon l'une quelconque des revendications précédentes, **caractérisé en ce que** l'élément de détection (20) est réalisé sous la forme d'un élément de commande dépendant de la température pour augmenter la résistance électrique dans la partie de connexion entre le point neutre (S) et la borne d'enroulement (T) lorsque la température monte.

7. Moteur synchrone selon l'une quelconque des revendications précédentes, **caractérisé en ce que** l'élément de détection (20) est réalisé sous la forme d'un élément de commande générateur de tension pour augmenter la différence de potentiel entre le point neutre (S) et la borne d'enroulement (T) lorsque la température monte.

8. Moteur synchrone selon l'une quelconque des revendications précédentes, **caractérisé en ce qu'**un montage de référence de point neutre résistif pourvu d'un point neutre (R) est prévu qui est relié respectivement par l'intermédiaire d'une résistance (R1, R2, R3) à respectivement l'une des bornes d'enroulement (U, V, W) alors qu'un montage de référence de point neutre résistif (R_{A}) provenant du point neutre (R) est prévu pour une unité d'évaluation (A).

9. Moteur synchrone selon l'une quelconque des revendications précédentes, **caractérisé en ce qu'**un point de référence est réalisé pour déterminer le potentiel au niveau de la borne d'enroulement (T) en tant que centre d'un diviseur de tension dans le circuit intermédiaire de l'électronique de commande (10).

10. Procédé permettant de déterminer un état opérationnel non conforme d'un moteur synchrone réalisé avec les particularités selon l'une quelconque des revendications 1 à 9, comprenant les étapes consistant à :
a) détecter indirectement ou directement la température ou une caractéristique de moteur dépendant de la température d'au moins une section d'enroulement (2, 3, 4) au moyen de l'élément de détection (20),
b) déconnecter la connexion électrique entre le point neutre (S) et la quatrième borne d'enroulement (T) en cas de dépassement d'une température limite prédéfinie au moyen de la fonction de commutation de l'élément de détection (20).

11. Procédé selon la revendication 10, **caractérisé en ce que** la surveillance de température ou la surveillance d'une caractéristique de moteur dépendant de la température d'au moins une section d'enroulement (2, 3, 4) est effectuée par une évaluation de la tension au niveau de la borne d'enroulement (T) pendant que le nombre de passages par zéro de la tension pendant une période de la fréquence de tension d'alimentation est détecté et comparé avec un nombre prédéfini de passages par zéro, dans lequel un nombre inférieur de passages par zéro de l'électronique de commande (10) ou de l'unité d'évaluation (A) est identifié comme un état opérationnel non conforme.

12. Procédé selon la revendication 10 ou 11, **caractérisé en ce que** la surveillance de température ou la surveillance d'une caractéristique de moteur dépendant de la température d'au moins une section d'enroulement (2, 3, 4) est effectuée par l'intermédiaire d'une évaluation de fréquence de la fréquence de tension au niveau de la borne d'enroulement (T) par une comparaison de la fréquence déterminée avec une fréquence de tension d'alimentation du moteur, et une fréquence inférieure à une valeur seuil de fréquence prédéfinie de l'électronique de commande (10) ou de l'unité d'évaluation (A) est identifiée comme un état opérationnel non conforme.

13. Procédé selon l'une quelconque des revendications précédentes 10 à 12, **caractérisé en ce que** pour l'évaluation de température, une tension différentielle U_{TR} entre formée entre la borne d'enroulement (T) et la tension au niveau d'une borne de référence de point neutre (R_{A}) d'un séparateur de tension.

14. Procédé selon l'une quelconque des revendications précédentes 10 à 13, **caractérisé en ce qu'**une détection de vitesse de rotation du moteur synchrone (1) est effectuée, la détection de vitesse de rotation étant effectuée sur la base de la tension différentielle U_{TR}.

15. Procédé selon l'une quelconque des revendications précédentes 10 à 14, **caractérisé en ce qu'**une détection de position du moteur synchrone (1) est effectuée, la détection de position étant effectuée sur la base de la tension différentielle U_{TR}.
